(19) Europäisches Patentamt / European Patent Office / Office européen des brevets

(11) **EP 3 317 240 B1**

(12) **EUROPEAN PATENT SPECIFICATION**

(45) Date of publication and mention
of the grant of the patent:
**02.10.2024 Bulletin 2024/40**

(21) Application number: **16789908.7**

(22) Date of filing: **02.05.2016**

(51) International Patent Classification (IPC):
$C07C\ 7/04^{(2006.01)}$  $F25J\ 3/08^{(2006.01)}$
$F25J\ 3/06^{(2006.01)}$  $B01D\ 53/00^{(2006.01)}$

(52) Cooperative Patent Classification (CPC):
**F25J 3/064; B01D 53/002; C01B 32/55;**
**F25J 3/061; F25J 3/0625; F25J 3/0635;**
**F25J 3/0655; F25J 3/067;** B01D 2256/22;
B01D 2256/245; B01D 2257/504; B01D 2259/65;
F25J 2205/10; F25J 2205/20; F25J 2205/30;

(Cont.)

(86) International application number:
**PCT/US2016/030470**

(87) International publication number:
**WO 2016/179115 (10.11.2016 Gazette 2016/45)**

(54) **METHOD OF CRYOGENIC PURIFICATION AND ETHANE SEPARATION**

VERFAHREN ZUR KRYOGENEN REINIGUNG UND ETHANTRENNUNG

PROCÉDÉS DE PURIFICATION CRYOGÉNIQUE ET SÉPARATION DE L'ÉTHANE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **06.05.2015 US 201562157889 P
23.12.2015 US 201562387322 P**

(43) Date of publication of application:
**09.05.2018 Bulletin 2018/19**

(73) Proprietor: **Sustainable Energy Solutions, LLC
Orem UT 84057 (US)**

(72) Inventors:
• **BAXTER, Larry L.
Orem, UT 84057 (US)**
• **EBRAHIMZADEH, Edris
Orem, UT 84057 (US)**

(74) Representative: **Murgitroyd & Company
165-169 Scotland Street
Glasgow G5 8PL (GB)**

(56) References cited:
EP-A1- 2 789 957     WO-A1-2014/058648
WO-A1-2014/058648   US-A- 2 900 797
US-A- 4 246 015      US-A- 4 766 731
US-A1- 2009 090 049  US-A1- 2010 147 022
US-A1- 2010 281 916  US-A1- 2012 297 821
US-A1- 2013 074 541

(52) Cooperative Patent Classification (CPC): (Cont.)
F25J 2235/80; F25J 2270/12; Y02C 20/40;
Y02P 20/151

**Description**

TECHNICAL FIELD

The present disclosure relates generally to industrial processes. More specifically, the present invention relates to methods of cryogenically purifying process streams, separating ethane from carbon dioxide, and systems related thereto.

BRIEF DESCRIPTION OF THE DRAWINGS

The written disclosure herein describes illustrative embodiments that are non-limiting and non-exhaustive. Reference is made to certain of such illustrative embodiments that are depicted in the figures, in which:

FIG. 1 is a schematic diagram of one embodiment of a high-pressure or condensing natural gas processing system falling within the scope of the appended claims.
FIG. 2 is a schematic diagram of an exemplary simplified version (not falling within the scope of the appended claims) of the processing system illustrated in Figure 1.
FIG. 3 is a schematic diagram of an exemplary low-pressure process (not falling within the scope of the appended claims) in which the major product does not condense.
FIG. 4 illustrates an exemplary method to lower the dissolved $CO_2$ content that does not fall within the scope of the appended claims.
FIG. 5 illustrates an exemplary variation of conventional two-column extractive distillation used to separate $CO_2$ from ethane that does not fall within the scope of the appended claims.
FIG. 6(a) depicts a temperature profile for extractive and recovery columns of the system of Figure 5 that does not fall within the scope of the appended claims.
FIG. 6(b) depicts a composition profile for extractive columns of the system of Figure 5 that does not fall within the scope of the appended claims.
FIG. 6(c) depicts a composition profile for recovery columns of the system of Figure 5 that does not fall within the scope of the appended claims.
FIG. 7 illustrates a flowsheet for an exemplary $CO_2$-ethane azeotrope separation that does not fall within the scope of the appended claims.
FIG. 8(a) depicts a temperature profile for extractive and recovery columns of the system of Figure 7 that does not fall within the scope of the appended claims.
FIG. 8(b) depicts a composition profile for extractive columns of the system of Figure 7 that does not fall within the scope of the appended claims.
FIG. 8(c) depicts a composition profile for recovery columns of the the system of Figure 7 that does not fall within the scope of the appended claims.
FIG. 9(a) depicts a graph showing the effect of solvent and reflux ratio on $CO_2$ purity provided for exemplary purposes and not itself falling within the scope of the appended claims.
FIG. 9(b) depicts a graph showing the effect of solvent and reflux ratio on a $CO_2$ impurity in the extractive column distillate provided for exemplary purposes and not itself falling within the scope of the appended claims.
FIG. 9(c) depicts a graph showing the effect of solvent and reflux ratio on another $CO_2$ impurity in the extractive column distillate provided for exemplary purposes and not itself falling within the scope of the appended claims.

DETAILED DESCRIPTION

Methods of cryogenically purifying process streams and systems related thereto are disclosed herein. It will be readily understood that the embodiments as generally described below and as illustrated in the examples and Figures could be modified in a wide variety of ways. Thus, the following more detailed description of various embodiments, as described below and represented in the examples and Figures, is not intended to limit the scope of the invention, but is merely representative of various embodiments. The scope of the present invention is defined by the appended claims. WO2014/058648 A1 discloses a method of separating carbon dioxide from a process stream according to the preamble of independent claim 1.

The phrase "in communication with" and the term "connecting" refer to any form of interaction between two or more entities, including mechanical, electrical, magnetic, electromagnetic, fluid, and thermal interaction. Two entities may interact with each other even though they are not in direct contact with each other. For example, two entities may interact with each other through an intermediate entity.

Methods of cryogenically purifying process streams may comprise methods of separating carbon dioxide from a process stream and condensing a primary component of the process stream. Alternatively, methods of cryogenically purifying process streams may comprise methods of separating carbon dioxide from a process stream without condensing a primary component of the process stream. As defined in claim 1, the present invention as claimed is directed towards a method of separating carbon dioxide from a process stream comprising (among other steps recited in claim 1) condensing the primary component and solidifying the carbon dioxide.

In some examples of methods of separating carbon dioxide from a process stream and condensing a primary component of the process stream that do not fall within the scope of the appended claims, the methods comprise providing a process stream comprising gaseous carbon dioxide and further comprising a primary component, wherein the process stream is at a first temperature and a first pressure. The methods further comprise cooling the process stream to at or below the condensation temperature of the primary component in the process stream. The methods may further comprise separating any gases from the process stream that did not condense during cooling the process stream to at or below the condensation temperature of the primary component to form a first separated gaseous stream. The methods further comprise cooling the process stream further to at or below the frost point of carbon dioxide in the process stream, thereby forming solid carbon dioxide, and separating physically solid carbon dioxide from the process stream to form a separated solid carbon dioxide slurry stream and a liquid primary component stream.

In some examples of separating carbon dioxide from a process stream without condensing a primary component of the process stream that do not fall within the scope of the appended claims, the methods comprise providing a process stream comprising gaseous carbon dioxide and further comprising a primary component, wherein the process stream is at a first temperature and a first pressure. The methods further comprise reducing the temperature of the process stream to a temperature at or below the frost point of carbon dioxide in the process stream, by directly contacting the process stream with a colder contact liquid, thereby forming solid carbon dioxide in the contact liquid and forming a gaseous purified primary component stream. The methods may further comprise separating physically solid carbon dioxide from the contact liquid to form a solid carbon dioxide slurry stream from a purified contact liquid stream.

Systems (not falling within the scope of the appended claims) for cryogenically purifying process streams may comprise systems for separating carbon dioxide from a process stream and condensing a primary component of the process stream. Systems (not falling within the scope of the appended claims) for cryogenically purifying process streams may comprise systems for separating carbon dioxide from a process stream without condensing a primary component of the process stream.

In some examples of systems (not falling within the scope of the appended claims) for separating carbon dioxide from a process stream and condensing a primary component of the process stream, the systems comprise a desublimation heat exchanger configured to receive a process stream comprising gaseous carbon dioxide and a primary component with a condensation temperature above the frost point of carbon dioxide at the pressure of the process stream, the desublimation heat exchanger further configured to cool the process stream to at or below the frost point of carbon dioxide in the process stream. The systems may further comprise a solid-liquid separator configured to physically separate a solid carbon dioxide slurry stream from a liquid purified primary component stream.

In some examples of systems (not falling within the scope of the appended claims) for separating carbon dioxide from a process stream without condensing a primary component of the process stream, the systems comprise a desublimation heat exchanger configured to receive a process stream comprising gaseous carbon dioxide and a primary component, configured to receive a colder contact liquid stream, configured to directly contact the process stream with the colder contact liquid stream and cool the process stream to at or below the frost point of carbon dioxide in the process stream, configured to produce a gaseous purified primary component stream, and configured to produce a solids-containing contact liquid stream. The systems may further comprise a solid-liquid separator configured to receive the solids-containing contact liquid stream and physically separate a solid carbon dioxide slurry stream from a purified contact liquid stream.

The methods and systems disclosed herein (not all of which fall within the scope of the appended claims but are provided for exemplary purposes) may be used to remove carbon dioxide ("$CO_2$") and condensable or absorbable liquids from a process stream. For example, the methods and systems may be used for removing $CO_2$, natural gas liquids, and other components that condense and/or absorb under the specified operating conditions from a raw natural gas stream. In another example, the methods and systems may be used for treating syngas/producer gas stream for $CO_2$ and other condensable/absorbable components. In both cases, the process produces a treated stream with less $CO_2$ and condensable liquids. Additionally, a liquid $CO_2$ stream and a separated liquids stream may be produced as well.

The methods and systems (not all of which fall within the scope of the appended claims but are provided for exemplary purposes) may be used to treat both high-pressure streams, meaning streams at pressures and temperatures under which the bulk of the stream condenses to form a liquid in some portion of the process, and low-pressure streams, meaning streams at pressures and temperatures under which the bulk of the treated stream remains a gas but that may nevertheless be at greater than ambient pressure. Process descriptions for these two exemplesappear in separate descriptions below.

LNG quality requirements are 2% and 2.5% $CO_2$ in Canada and the European Union, respectively (Grunvald, A., N. Izotov and V. Nemov (2008). <u>Gas Quality Requirements as a Factor of Successful LNG Projects Implementation.</u> International Gas Union Research Conference, Paris.). The United States does not currently have LNG quality requirements, but re-vaporized LNG must meet natural gas pipeline standards of 2-4% $CO_2$ (Gas Processors Suppliers Association (1998). (1998). <u>GPSA Engineering Data Book.</u> Tulsa, OK.). Even with these standards, in practice natural gas is pretreated for $CO_2$ removal down to 50 ppm before liquefaction. The reason for $CO_2$ removal down to 50 ppm stems from concerns with degradation of operability due to potential $CO_2$ freezing during natural gas liquefaction. The solubility of $CO_2$ in the final LNG product at normal conditions is higher than 50 ppm (Shen, T., T. Gao, W. Lin and A. Gu (2012). "Determination of CO2 Solubility in Saturated Liquid CH4 + N2 and CH4 + C2H6 Mixtures above Atmospheric Pressure." Journal of Chemical & Engineering Data 57(8): 2296-2303.)

High Pressure

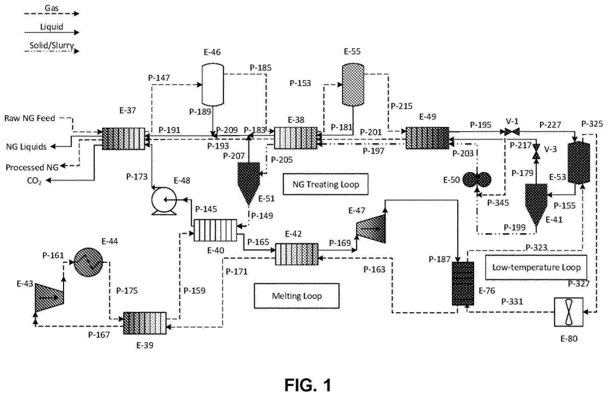

An exemplary process configuration for the condensing or high-pressure process appears in Figure 1 with major equipment described in **Table 1.** The discussion focuses on natural gas processing; however, the technology applies to any process in which a major portion of the stream to be treated condenses as a liquid (at the pressures of the stream and at a temperature higher than the frost point of $CO_2$ in the stream). The dashed, solid, and dot-dashed lines in the Figure represent streams that are primarily gaseous, liquid, and solid, respectively. Multiple phases may exist in many of the streams, with the type of line representing the dominant phase.

Table 1 Major pieces of equipment in the natural gas treating loop. Equipment numbers correspond to Figure 1.

| Equipment | Description |
| --- | --- |
| E-37 | Condensing heat exchanger I |
| E-46 | Natural gas liquids (NGL) separator I |
| E-123 | Natural gas liquids (NGL) pump |
| E-38 | Condensing heat exchanger II |
| E-55 | Natural gas liquids (NGL) separator II |
| E-49 | Condensing heat exchanger III |
| V-1 | Pressure regulating valve or turbine |
| E-53 | Solids-forming direct-contact heat exchanger |
| E-41 | Solids-liquids separator I |
| V-3 | Pressure regulating value of turbine |
| E-50 | Solids/slurry pump I |
| E-51 | Solids-liquids separator II |
| E-40 | Solids melter |
| E-48 | Liquid pump |

Figure 1 includes three subprocesses, namely a natural gas treating loop, a melting loop, and a low-temperature cooling loop. Only the first of these is required to implement the reducing gas cryogenic carbon capture process, with the possible requirement of supplemental refrigeration of traditional types. Descriptions of all three exemplary subprocesses appear separately below. The main processes are removal of natural gas liquids and $CO_2$ from the raw natural gas stream. These processes occur in the natural gas treating loop and are described first.

Natural Gas Treating Loop

The natural gas treating loop involves the major pieces of equipment identified in Table 1 and the associated connecting streams, minor equipment, and controls, listed in the order that the incoming raw natural gas stream encounters them.

The exemplary process begins with raw natural gas (the "process stream" at the "first pressure" of this example). This gas cools to ambient or slightly below ambient temperature using cooling water or other resources (the "first temperature" of this example) and is then dried using conventional techniques that are not illustrated. The raw, dry natural gas feed stream first cools in heat exchanger E-37 (the "first heat exchanger" of this example) to temperatures above and near the melting point of pure $CO_2$ at the pressure of the system (the "second temperature" of this example), which in most cases will be near -55 °C. "Above and near" may comprise less than about 15° C above, less than about 10° C above, or less than about 5° C above. The first heat exchanger condenses some of the natural gas liquids present in the process stream as the stream cools. These natural gas liquids separate (the "first separated liquids stream" of this example) from the gaseous bulk of the flow in E-46 and combine with other natural gas liquid streams originating from other portions of the process to form stream P-191. Stream P-191 returns counter-currently through the heat exchanger to return to near the first temperature as it helps cool the process stream. A liquid pump, E-123, included as part of E-46, raises the pressure of the stream P-189 such that it can mix with stream P-209 to form stream P-191. Stream P-191 may be at sufficient pressure that none of it, or only the lightest components of it, will vaporize as it warms back to the first temperature in E-37. In other embodiments, some or all of the stream will vaporize.

In an alternative embodiment, the liquids collected in E-46 flow in a separate stream through E-38 and rejoin the vapors in stream P-215, with or without any liquids collected in E-55. In this alternative embodiment, any liquids condensed may be combined with the condensed primary component formed in E-49.

The bulk of the natural gas stream (the "process stream") flows as a gas from E-46 into a second heat exchanger, E-38, that drops the temperature to above and near the condensation point of the natural gas at the pressure of the system (the "third temperature" of this example), which is typically about -82 °C. Some trace impurities, such as Hg, will largely condense with the liquids in E-46 while others, such as $H_2S$, may not condense until later in the process, depending on their concentrations in the raw gas. Other trace components may never condense, such as noble gases like helium and argon. Additional natural gas liquids condense as the stream cools, and E-55 separates these natural gas liquids (the "second separated liquids stream" of this example) from the gaseous stream and introduces them to the natural gas liquids stream P-197 in a manner similar to E-46, namely, by pumping them to the line pressure. They return through E-38 and help cool the incoming natural gas stream as they warm.

The bulk of the natural gas stream (the "process stream") leaves E-55 as a vapor and enters a third heat exchanger E-49, where the methane condenses to form some or mostly liquid as stream P-195. The now-liquid natural gas stream exits the heat exchanger E-49. Depending on the initial gas composition, it is possible that stream P-195 will contain $CO_2$ or other gas-phase species. These are separated in stream P-345 (the "third separator" of this example) to join the solid $CO_2$ stream at this point. Non-condensed trace components, such as noble gases, could also be separated at this point from stream P-345. Alternatively, non-condensed gases may be separated slightly later in the process in versions that do not have a melting loop, such as discussed below. The liquid natural gas (the "process stream") passes through a pressure regulating device shown as valve V-1 in the diagram but which could also be a cryogenic turbine.

The natural gas stream which is now line P-227 passes into a solids-forming heat exchanger (the "desublimation heat exchanger" of this example) E-53, similar to those disclosed in U.S. 8,715,401 or U.S. 8,764,885, or of other suitable type. The desublimation heat exchanger may be a direct-contact heat exchanger and configured to form solids in the heat exchanger without fouling or plugging and may integrate heat transfer to minimize both pressure drop and energy consumption. The heat exchanger forms solid $CO_2$ in the stream as the stream cools to its lowest temperature, which is dictated by the amount of $CO_2$ and natural gas liquids removal required by the process. Depending on the operating pressure and composition, some vapor or gases may be present in E-53, P-227, and possibly P-195. The solids-forming heat exchanger may be staged (e.g., one or more additional desublimation heat exchangers) to maximize the process efficiency.

The solid-liquid slurry, P-155, that forms in the solids-forming heat exchanger, E-53, flows into a solids-liquid separation device, E-41. The solids leave the separator, E-41, as a slurry in P-199, and combines with the residual light gases in stream P-345, if there are any. The slurry in P-199 may have as little residual liquid as possible - as much as is needed for transport via suitable auger, pump, or other conveyance, E-50, back through heat exchanger E-49. The slurry in P-199 helps cool the process stream as it warms. The liquids phase (the "liquid purified primary component stream" of this example), P-179, which contains most of the now-refined natural gas in a liquid phase, exits the solids-liquid separator, E-41, and flows in line P-179 through a pressure control valve, V-3, and then as line P-217 back into heat exchanger, E-49, where it vaporizes and warms as it helps to cool the incoming stream. The pressure of the returning natural gas liquid stream, P-179, is regulated by valve V-3 or conceivably a turbine to form stream P-217 to optimize the performance of the system, specifically to provide optimal temperature profile matching in E-49.

The contacting liquid in the solids-forming heat exchanger forms from the condensates of the natural gas stream, which includes the methane in this example. It will typically be saturated with $CO_2$ by the time it exits the heat exchanger at its low-temperature limit. In the case that there is insufficient condensed methane to satisfy the demand for a contacting liquid, a portion of P-179 could be cooled and then recirculated to E-53 to maintain adequate liquid to operate the desublimation heat exchanger.

Returning to Figure 1, the natural gas stream, P-197, exits E-49 as a gas with reduced natural gas liquids and $CO_2$ contents, as well as reduced contents of other condensable gases and trace contaminants ($H_2S$, Hg), and flows through heat exchangers E-38 and E-37, cooling the incoming streams as it warms. The natural gas eventually returns to near the first temperature as a refined product. The solid $CO_2$ stream, P-201, exits E-49 after helping to cool the incoming process stream, P-215, and continues to warm as it cools the incoming gas process stream, P-185, in heat exchanger E-38.

Alternatively, the liquefied natural gas, such as in P-179, may not be warmed and vaporized as illustrated, but instead may be transported to an LNG distribution network, with or without additional processing.

Returning to Figure 1, the solid $CO_2$ stream exits heat exchanger E-38 near its melting point and flows to a solids-liquids separation device, E-51. Routing the solids streams P-203 and P-201 through the heat exchangers E-49 and E-38 may not be practical, and the solids may go directly from E-41 to E-51. The solids-liquids separator, E-51, removes residual liquids from the stream and returns these to the natural gas liquids stream as stream P-207. The remaining solids flow as stream P-149 to the melting heat exchanger, E-40, where they melt as they condense stream P-159. Stream P-159 is described as part of the melting loop below.

The liquid $CO_2$ stream, P-145, exiting the melting heat exchanger, E-40, is further pressurized in pump E-48 and then flows through heat exchanger E-37 to help cool the incoming raw natural gas feed (the "process stream") as it returns to near the first temperature as a nearly pure, liquid $CO_2$ stream. The final state of the $CO_2$ depends on the incoming stream temperature and overall pressure. The state can be liquid, supercritical, or gas.

The process pressure after the expansion valve/turbine, V-1, determines several operating conditions of the process. The example illustrated in Figure 1 assumes little to no pressure drop in V-1. If the pressure drops sufficiently that methane forms some vapor, the methane in the system becomes an auto-refrigerant and can perform some or all of the cooling.

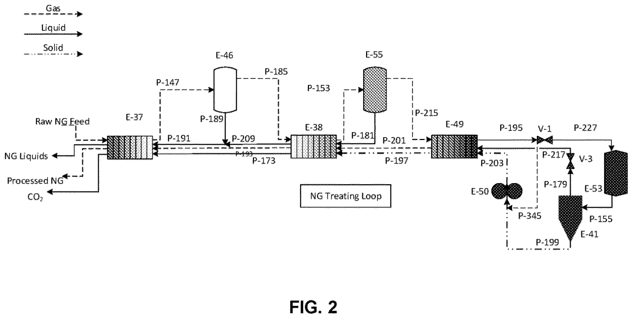

If, in addition, the amount of $CO_2$ is low or the heat recovery from the $CO_2$ is unimportant, a simple version of the process (not falling within the scope of the appended claims but provided for exemplary purposes) as illustrated in Figure 2 may be used. This version of the process would usually be able to reduce $CO_2$ content to pipeline specifications (< 2%) and/or to LNG specifications (< 0.1%). In this case, the solids separator, E-41, produces a fluid stream that contains both gas and liquid, P-179, but the remainder of the process is similar to that of Figure 1. The process may need supplemental cooling at certain locations, as would be provided by refrigeration loops commonly known to process engineers.

If maintaining pressure is important or the pressure drop in V-1 is insufficient for a portion of the stream to vaporize, solid $CO_2$ formation will require additional cooling. Some non-limiting examples of possible cooling mechanisms are discussed in the next section.

Depending on the composition of the raw natural gas (the "process stream") and the relative importance of operating costs, energy efficiency, and capital costs, the steps described in both of the embodiments above may suffice to perform the separations, possibly augmented by refrigerant loops to supplement cooling where needed. The process diagram in Figure 1 illustrates additional innovations that increase energy efficiency and decrease overall complexity and cost, as discussed next.

Some optional cooling support for the melting heat exchanger, E-40, and the solids-forming heat exchanger, E-53, are discussed below.

The Melting Loop

The melting loop uses a nearly closed-loop refrigeration system to melt the solid $CO_2$ and transfer the heat to the coldest point in the overall system. It involves the major pieces of equipment identified in Table 2 and the associated connecting streams and controls.

Table 2 Major components of the melting loop. Equipment numbers correspond to Figure 1.

| Equipment | Description |
| --- | --- |
| E-43 | Compressor (preferably with inter-stage coolers) |
| E-44 | Ambient heat exchanger (or inter-stage coolers in E-43) |
| E-39 | Recuperating heat exchanger I |
| E-40 | Solids melter |
| E-42 | Recuperating heat exchanger II |
| E-47 | Expansion valve or turbine |
| E-76 | Low-temperature heat exchanger |

The cooling loop compresses the refrigerant in compressor E-43 and cools it in a heat exchanger E-44 to or near the available heat rejection temperature of the process, which will usually be near ambient temperature. Many embodiments may use staged compressors and heat exchangers to maximize the efficiency of this process, effectively combining E-43 and E-44 in several stages in a single unit. The pressurized refrigerant in P-175 cools to near the melting point of $CO_2$ in heat exchanger E-39 and then flows through P-159 and condenses in the melting heat exchanger, E-40, as it melts the solid $CO_2$. The resulting liquid refrigerant stream, P-165, flows through a second recuperating heat exchanger, E-42, to cool to as low of a temperature as possible as it warms the refrigerant flowing counter-currently in the same heat exchanger. The cool refrigerant stream, P-169, enters an expansion valve or expansion turbine, E-47, where the pressure drops. The resulting stream vaporizes in E-76 and warms as it cools stream P-331 that comes from the solids-forming heat exchanger. The gaseous refrigerant stream, P-163, returns through both recuperating heat exchangers, E-42 and E-39, as it warms back to near ambient temperatures, at which point it completes the loop.

The primary purpose of this loop is to shift the heat of melting $CO_2$ from its nominal melting point, -55 °C, to a temperature low enough to provide cooling for the solids-forming heat exchanger. This could be enough energy to freeze all of the $CO_2$ in the solids-forming heat exchanger. However, if process conditions and heat losses require additional cooling, a supplementary cooling loop of similar design but without the melting heat exchanger and using either a reverse Brayton or reverse Rankine cycle with recuperative heat recover would supplement this loop. Such cooling loops are well known to one skilled in the art of such processes.

The Low-Temperature-Heat-Exchange Loop

The low-temperature-heat-exchange loop supplements any auto-refrigerant cooling done by dropping the pressure in V-1 and uses a nearly closed-loop refrigeration system to form solids in direct-contact heat exchanger, E-53. It involves the major pieces of equipment identified in **Table 3** and the associated connecting streams and controls.

Table 3 Major components of the low-temperature-heat-exchange loop. Equipment numbers correspond to Figure 1.

| Equipment | Description |
|---|---|
| E-76 | Low-temperature heat exchanger |
| E-53 | Solids-forming direct-contact heat exchanger |
| E-80 | Fan/pressure driving force |

A light gas minimally soluble in the liquid natural gas (the "process stream") in the solids-forming heat exchanger, E-53, cools in the low-temperature heat exchanger, E-76, to as low of a temperature as P-187 reasonably allows. This cold gas passes by the liquid natural gas either as a bubbling stream or in a cryogenic spray tower configuration in E-53. The gas warms as it cools the liquid stream coming from P-227, solidifying $CO_2$ as the liquid/slurry temperature drops. A fan or other suitable pressurizer provides the pressure rise required for the gas with small amounts of natural gas vapor to return to the low-temperature heat exchanger, E-76. Gases of potential interest include $N_2$, any noble gas, CO, and any other suitable material. A small amount of this gas will inevitably be entrained by or dissolve in the stream flowing from the solids-forming heat exchanger, P-155. This will have to be made up over time by some gas supply. Air is a potential candidate for the gas, as the stream P-155 and all subsequent natural-gas-containing streams should be well above the higher flammability limit and P-325 and all other cooling streams should be well below the lower flammability limit. The circulating gas in P-323, P-325, and P-331 should saturate with both methane and $CO_2$ and will neither remove nor add either material from the process, under steady-state conditions, once the initial transient is over.

Low Pressure

The following description of a system and method conducted at low pressure is provided for exemplary purposes only and does not fall within the scope of the appended claims.

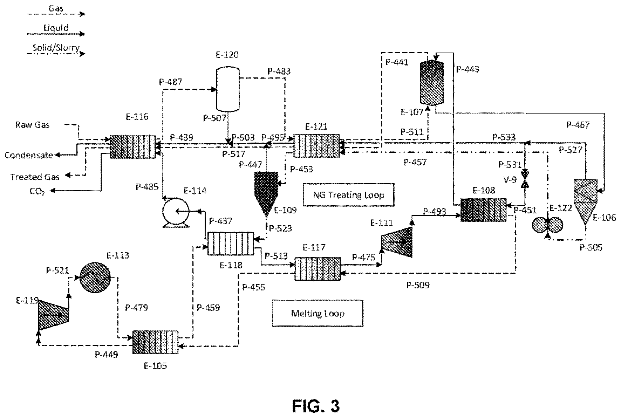

A similar exemplary process to that illustrated in Figures 1 and 2 and that operates at pressures too low or temperatures too high to condense the primary component (natural gas, syngas (CO and $H_2$), or any other light gas mixture in which the major product does not condense at the temperature and pressure of operation) appears in Figure 3. It is similar to the condensing process described above. The melting loop is essentially identical. The major components of the process appear in Table 4. This process is described in terms of its subprocesses similar to above. As with the high-pressure, condensing system, this process begins by conditioning the gas (the "process stream" of this example) to as low of a temperature as is locally achievable using local cooling water or air and condensing heat exchangers (the "first temperature" and the "first pressure" of this example). Any moisture in the process stream is also removed using absorbents or other available equipment.

If the level of $CO_2$ solids formation requires more cooling than is available from this stream, a supplemental refrigerant loop could be incorporated into this low-temperature loop.

The Gas Treatment Loop - low pressure example

Table 4 Major pieces of equipment in the noncondensing system (not falling within the scope of the appended claims). Equipment numbers correspond to Figure 3.

| Equipment | Description |
| --- | --- |
| E-116 | Heat exchanger |
| E-120 | Liquids separation |
| E-121 | Heat exchanger II |
| E-107 | Desublimating heat exchanger |
| E-106 | Solids-liquids separation |
| V-9 | Pressure reduction valve/turbine |
| E-122 | Solids/slurry pump I |
| E-108 | Heat exchanger III |
| E-109 | Solids-liquids separator II |
| E-118 | Solids melter |
| E-114 | Liquid pump |

The process (not fallin within the scope of the appended claims) begins with raw gas (the "process stream" at the "first pressure" of this example). This gas cools to ambient or slightly below ambient temperature (the "first temperature" of this example) using cooling water or other resources and is then dried using conventional techniques that are not illustrated. The raw, dry gas feed stream first cools in the first heat exchanger E-116 to temperatures near the melting point of pure $CO_2$ at the pressure of the system (the "second temperature" of this example), which in most cases will be near -55 °C. The first heat exchanger condenses vapors such as natural gas liquids, if present, as the stream cools. These liquids separate (the "first separated liquid stream" of this example) from the gaseous bulk of the flow in E-120 and combine with other liquids streams originating from other portions of the process to form stream P-439, which returns counter-currently through the heat exchanger to return to near the stream initial temperature as it helps cool the incoming process stream. A liquid pump, included as part of E-120, raises the pressure of the stream P-507 such that it can mix with stream P-503 to form stream P-439. The liquid stream may be at sufficient pressure that none of it, or only the lightest components of it, will vaporize as it warms back to its initial temperature. In other examples, some or all of the stream may vaporize.

The bulk of the gas stream (the "process stream") flows as a gas from E-120 into a second heat exchanger, E-121, that drops the temperature to above and near the frost point (the "third temperature" of this example, i.e., the temperature at which solid $CO_2$ begins to form in the stream). Some trace impurities, such as Hg, will largely condense with the liquids in E-116 while others, such as $H_2S$, may not condense until later in the process, depending on their concentrations in the raw gas. Some constituents, such as $H_2$, NO, and CO, will not condense at any stage of this process and are considered light gaseous products produced with the processed gaseous products. Additional vapors may condense as the stream cools, in which case stream P-511 enters the desublimating heat exchanger, E-107, as a two-phase (gas, liquid) system.

The desublimating heat exchanger may be one disclosed in U.S. 8,715,401 or U.S. 8,764,885. The desublimation heat exchanger may be a direct-contact heat exchanger and configured to form solids in the heat exchanger without fouling or plugging and may integrate heat transfer to minimize both pressure drop and energy consumption. The gases in stream P-511 (the "process stream") flow counter-currently with colder liquids introduced into the vessel as stream P-443, and solid $CO_2$ forms on the liquid surface as the streams pass, removing $CO_2$ from the gaseous stream. The slurry that results flows through P-467 into a solid-liquid separator, E-106. The separator forms a high-solids-loading slurry with the solids which exits in P-505, and a liquid phase (the "purified contact liquid stream" of this example) which exits in P-527. This liquid phase includes the liquids introduced into the desublimating heat exchanger in P-443 and those that condensed and entered through P-511. A portion of this liquid stream splits off as P-531 and the remainder flows back through the heat exchangers as P-533 (the "separated contact liquid stream" of this example). The split portion P-531 passes through a valve or turbine, V-9, to decrease the pressure and reduce the tendency of solids to form as it cools in a heat exchanger (part of the "first refrigeration system" of this example) that drops the slip stream to the lowest temperature of the system, E-108. This stream returns to the desublimating heat exchanger, E-107, and completes the loop from which it started. Gases (the "process stream") that contain no condensable vapors, such as many syngases and flue gases, return all of the liquids (the "contact liquid") back to the desublimating heat exchanger, E-107.

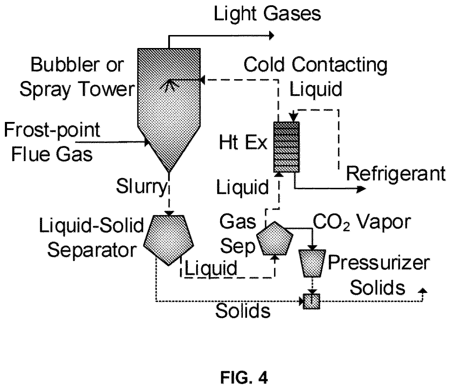

As an alternative to the processes involved in P-531 and V-9, the low-temperature loop can use any traditional external refrigerant cooling system if the $CO_2$ content of the condensed phase is low enough. Figure 4 illustrates one method to lower the dissolved $CO_2$ content. The $CO_2$ slurry from the desublimating heat exchanger (bubbler or spray tower, P-467) passes through a solid-liquid separator as usual (E-106), producing one stream comprising primarily $CO_2$ solid and a second liquid stream. The liquid stream comprises primarily the contacting liquid with some dissolved $CO_2$. The liquid stream enters a low-pressure gas separation unit (part of the "desaturation system" of this example) in which the pressure is low enough that some dissolved $CO_2$ changes phase. This decreases the dissolved $CO_2$ content and changes the liquid temperature. Some of the dissolved $CO_2$ and the remaining liquid are now in separate phases and return to their original pressures, such as via pumps, in separate streams. The $CO_2$ stream will commonly form a solid in this process, and this stream combines with the previously formed solids stream. The liquid stream that is no longer saturated in $CO_2$ (the "further purified contact liquid stream" of this example) enters a traditional heat exchanger where it cools without risk of solid $CO_2$ formation.

The Melting Loop - low pressure example

The melting loop uses a nearly closed-loop refrigeration system to melt the solid $CO_2$ and transfer the heat to the coldest point in the overall system. It involves the major pieces of equipment identified in Table 5 and the associated connecting streams and controls.

Table 5 Major components of the melting loop. Equipment numbers correspond to Figure 3.

| Equipment | Description |
| --- | --- |
| E-119 | Compressor (preferably with inter-stage coolers) |
| E-113 | Ambient heat exchanger (or inter-stage coolers in E-119) |
| E-105 | Recuperating heat exchanger I |
| E-118 | Solids melter |
| E-117 | Recuperating heat exchanger II |
| E-111 | Expansion valve or turbine |
| E-108 | Low-temperature heat exchanger |

The cooling loop compresses the refrigerant in compressor E-119 and cools it in a heat exchanger, E-113, to or near the available heat rejection temperature of the process, which will usually be near ambient temperature. Many embodiments will use staged compressors and heat exchangers to maximize the efficiency of this process, effectively combining E-119 and E-113 in several stages in a single unit. The pressurized refrigerant in P-479 cools to near the melting point of $CO_2$ in heat exchanger E-105 and then flows through P-459 and condenses in the melting heat exchanger, E-118, as it melts the solid $CO_2$ in the gas treatment loop. The resulting liquid refrigerant stream, P-513, flows through a second recuperating heat exchanger, E-117, to cool to as low of a temperature as possible as it warms the refrigerant flowing counter-currently in the same heat exchanger. The cool refrigerant stream, P-475, enters an expansion valve or expansion turbine, E-111, where the pressure drops. The resulting stream vaporizes in E-108 and warms as it cools the liquid stream P-451 (the "purified contact liquid stream") that comes from the solids-forming heat exchanger. The gaseous refrigerant stream, P-509, returns through both recuperating heat exchangers, E-117 and E-105, as it warms back to near ambient temperatures, at which point it completes the loop.

The primary purpose of this loop is to shift the heat of melting $CO_2$ from its nominal melting point, -55 °C, to a temperature low enough to provide cooling for the solids-forming heat exchanger. This could be enough energy to freeze all of the $CO_2$ in the solids-forming heat exchanger. However, if process conditions and heat losses require additional cooling, a supplementary cooling loop of similar design but without the melting heat exchanger and using either a reverse Brayton or reverse Rankine cycle with recuperative heat recover would supplement this loop. Such cooling loops are well known to one skilled in the art of such processes.

Cooling Loops - low pressure example

Any of the processes disclosed herein may require additional cooling loops as are common in this industry to overcome heat losses, to balance heat loads, or to otherwise maintain efficient and effective temperature profiles throughout the system.

Subprocesses

One of ordinary skill in the art, having the benefit of this disclosure, would understand that a number of variations could be made to the processes of Figures 1 through 4. For example, portions of the above processes can retrofit existing natural gas and syngas systems without building the entire process illustrated in the figures. Specifically, using the desublimation heat exchangers and the surrounding equipment can retrofit existing natural gas processes, such as amine processes. In another example, when the primary component is natural gas, a portion of the condensed natural gas formed in some of these processes can be used as liquefied natural gas (LNG) product, which will reduce the amount of material circulating back through the system and change the amount and location of supplemental refrigeration required. Subprocess implementations could be among the first implementations of the embodiments disclosed herein in commercial practice.

In regard to the temperature calculations discussed herein, the high-pressure methods and systems pertain to conditions at which the primary component of the gas condenses at the pressure of the system. Since the gas process streams generally are mixtures, this condensation occurs over a temperature range rather than at a specific temperature as occurs for pure components. Standard theoretical techniques or experimental measurements may be used to determine these temperatures. The predictive techniques in general may include non-ideal equations of state (Peng-Robinson, Soave-Redlich-Kwong, and Predictive Soave-Redlich-Kwong are common examples). Additionally, activity coefficient models (NRTL, Wilson, Uniquac, and Unifac are common examples) may also be used and possibly a Poynting correction. Many of these equations require or would benefit from experimentally determined interaction parameters. In general, the process removes moisture, cools to the point of the major phase beginning to condense, during which cooling minor components such as natural gas liquids substantially condense, cool further as the major component condenses, and cools further in a desublimation heat exchanger as CO2 condenses and usually at least partially forms a solid. These condensation points can all be measured experimentally or predicted as previously indicated.

In the low-pressure process (not falling within the scope of the appended claims), the gases cool to near the temperature at which $CO_2$ begins to desublimate. During this cooling, minor components often condense from the gas. These components can be either separated from the stream and returned, as illustrated, or combined with the separated stream if this is beneficial. Further cooling forms condensed $CO_2$. Desublimation heat exchangers provide the mechanism for cooling as solid $CO_2$ (or any other component) forms. These condensation points can all be measured experimentally or predicted as previously indicated.

The foregoing cryogenic purifying methods and systems may be used to remove carbon dioxide from raw natural gas that has been dried or comes sufficiently dry from the wellhead. Removal of acid gases, such as carbon dioxide, is often an early stage in natural gas processing. Extractive distillation methods and systems are also disclosed herein that may be used in later stages of natural gas processing. Conventionally, one of the final natural gas processing steps is the separation of natural gas liquids (NGL) from the gas. This is generally done with a demethanizer distillation column that separates methane gas from the NGL. Possible NGL that may be present in raw natural gas include ethane, propane, butane, pentane, and heavier hydrocarbons. Conventionally, the NGL are separated into individual components via additional distillation columns, and each component is further purified. All natural gas constituents absorb $CO_2$ to some degree when in the liquid phase. The existence of a minimum-temperature azeotrope between ethane and carbon dioxide particularly complicates $CO_2$ separation from ethane.

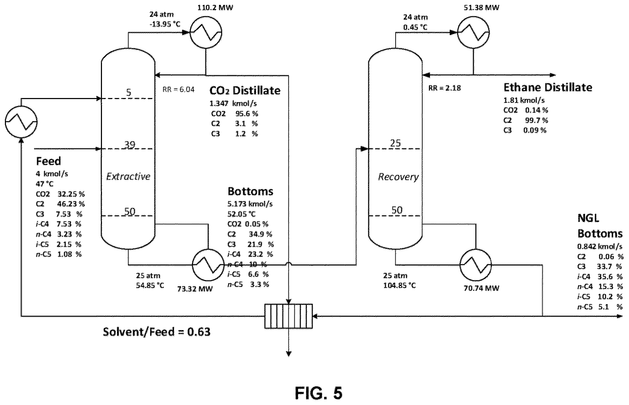

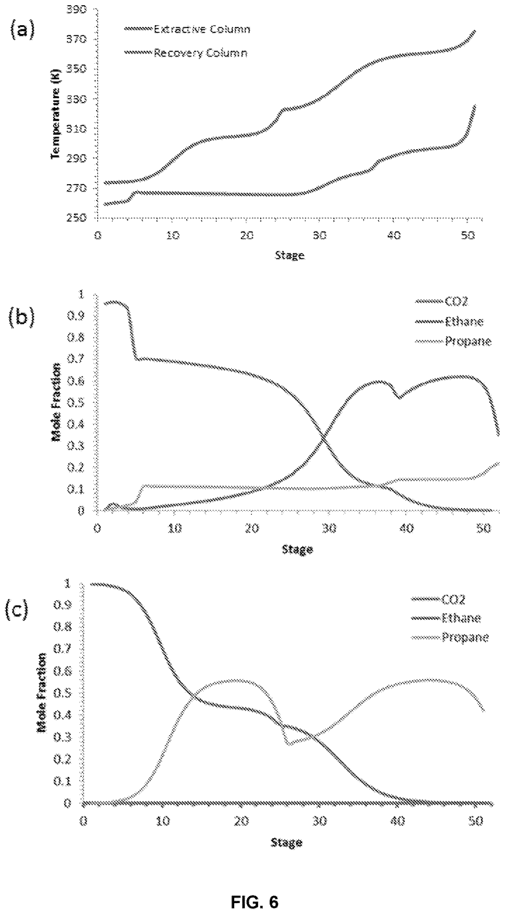

Figure 5 (not falling within the scope of the present claims) illustrates a direct sequence of extractive distillation columns (a variation of the conventional scheme) used to separate $CO_2$ from ethane, and is based on the information provided by Luyben and Tavan et al. [2],[4]. Figure 6 displays the temperature and liquid composition profiles for this base case. $CO_2$ collects as the top distillate from the first distillation column (extraction column), while the bottom product - consisting of ethane and heavier hydrocarbons ($C_3$+) and substantially free of $CO_2$ - feeds the second distillation column (solvent recovery column). High-purity ethane is obtained as the distillate product, and heavier hydrocarbons (NGL) are obtained as the bottom product of the solvent recovery column. The recovered NGL is divided into two parts, one of which is pumped back into the first column for breaking the azeotrope, and the second part goes to a sequence of conventional distillation columns (not shown) for separation into $C_3$, $iC_4$, $nC_4$, iCs, and nCs product streams.

"Substantially free" as used herein means free of less than 3% of the stated compound, but can include less than 2% and less than 1% of the stated compound on a mole percent basis.

In contrast to the scheme of Figure 5, in some examples of methods of separating carbon dioxide from ethane not falling within the scope of the appended claims, the methods comprise providing a feed stream comprising carbon dioxide, ethane, and higher molecular weight hydrocarbons and introducing the feed stream into a first distillation column, wherein the first distillation column is sized and configured to provide a first distillate stream and a first bottoms stream, wherein the first distillate stream comprises substantially pure carbon dioxide. The methods may further comprise introducing at least a portion of the first bottoms stream into a second distillation column, wherein the second distillation column is sized and configured to provide a second distillate stream and a second bottoms stream, wherein the second bottoms stream comprises higher molecular weight hydrocarbons and is substantially free of carbon dioxide and ethane. The methods may further comprise introducing at least a portion of the second bottoms stream into the first distillation column as a solvent stream, separate from the feed stream. The methods may further comprise introducing at least a portion of the second distillate stream into a third distillation column, wherein the third distillation column is sized and configured to provide a third distillate stream and a third bottoms stream, wherein the third bottoms stream comprises ethane and is substantially free of carbon dioxide and higher molecular weight hydrocarbons. The methods may further comprise combining at least a portion of the third distillate stream into the first distillation column separate from the feed stream.

The higher molecular weight hydrocarbons may include propane, butane, pentane, any natural gas component less volatile than ethane, or combinations thereof.

The first distillate stream may comprise at least about 90% pure, about 91% pure, about 92% pure, about 93% pure, about 94% pure, or about 95% pure carbon dioxide. Additionally or alternatively, the first distillate stream may be condensed and at least a portion refluxed to the first distillation column. The carbon dioxide may be stored for reinjection into the ground or used in other ways.

The first bottoms stream may comprise a significant amount of carbon dioxide impurity, for example, about 3 wt% or more, about 4 wt% or more, about 5 wt% or more, about 6 wt% or more, about 7 wt% or more, about 8 wt% or more, about 9 wt% or more, or about 10 wt% or more. This is in contrast to conventional extractive distillation schemes, wherein the bottom stream of the first distillation column is substantially free of $CO_2$, such as in the Figure 5 scheme where the $CO_2$ is about 0.05 wt% in that stream. Under conventional schemes, the first distillation column is sized and configured to achieve complete $CO_2$ separation in the first column. It has been discovered that by adding a third distillation column and instead of focusing on complete $CO_2$ separation, recycling an azeotropic mixture of $CO_2$ and ethane from the third distillation column, surprisingly, capital costs and operating costs can be reduced, as compared to the two-column scheme of Figure 5.

In keeping with the foregoing, the second distillate stream may comprise ethane and a significant amount of carbon dioxide impurity, such as, for example, about 3 wt% or more, about 4 wt% or more, about 5 wt% or more, about 6 wt% or more, about 7 wt% or more, about 8 wt% or more, about 9 wt% or more, or about 10 wt% or more. The second distillate stream may be partially condensed and refluxed to the second distillation column and the uncondensed portion introduced to the third distillation column.

The third distillate stream will generally comprise a substantial amount of ethane and a substantial amount of carbon dioxide, such as an azeotropic mixture of the two. The third distillate stream may be partially condensed and refluxed to the third distillation column and the uncondensed portion is the portion combined with the feed stream.

As should be understood, the feed stream may comprise the bottoms stream from a demethanizer column (not illustrated). One of ordinary skill in the art, with the benefit of this disclosure, would understand how to optimize the ratio of the second bottoms stream (solvent stream) to the feed stream so as to optimize the process. The portion of the second bottoms stream not combined with the feed stream may be further processed using conventional processes. For example, the portion of the second bottoms stream not used as solvent may be sent to a depropanizer column for separating out propane. The bottoms from the depropanizer column may be sent to a debutanizer column for separating out butane and so forth for separating out pentane.

In some embodiments, heat may be exchanged between the second bottoms stream and the third bottoms stream and/or the third distillate stream prior to introducing a portion of the second bottoms stream as a solvent.

In some embodiments, such as in the illustrated embodiments, heat is not exchanged between the first distillate stream and the second bottoms stream, thereby allowing the $CO_2$ in the first distillate stream to remain in the liquid phase. The methods of separating carbon dioxide from ethane contemplated herein may also be used with a new installation or with an existing extractive distillation process that has been retrofitted. Accordingly, methods of retrofitting are contemplated . In some examples, methods of retrofitting (not falling within the scope of the appended claims) an existing extractive distillation process, such as that disclosed in Figure 5, comprise: reconfiguring the first distillation column to provide a first bottoms stream comprising a significant amount of carbon dioxide impurity; introducing at least a portion of a second bottoms stream of the second distillation column as a solvent stream to the first distillation column, separate from the feed stream; and adding a third distillation column and introducing at least a portion of a second distillate stream of the second distillation column into the third distillation column, wherein the third distillation column is sized and configured to provide a third distillate stream and a third bottoms stream, wherein the third bottoms stream comprises ethane and is substantially free of carbon dioxide and higher molecular weight hydrocarbons.

The retrofit methods (not falling within the scope of the appended claims) may further comprise combining at least a portion of the third distillate stream with the feed stream prior to introducing it to the first distillation column. The third distillate stream may be partially condensed and refluxed to the third distillation column and the uncondensed portion combined with the feed stream. The third distillate stream may comprise an azeotropic mixture of ethane and carbon dioxide.

In some examples (not falling within the scope of the appended claims), an extractive distillation system for separating ethane from carbon dioxide comprises a first distillation column configured to receive a feed stream and a separate recycle stream. The first distillation column is sized and configured to provide a first distillate stream and a first bottoms stream. The system further comprises a second distillation column configured to receive the first bottoms stream, wherein the second distillation column is sized and configured to provide a second distillate stream and a second bottoms stream. The system may include a diversion system configured to provide a portion of the second bottoms stream as the recycle stream. The system further includes a third distillation column configured to receive the second distillate stream, wherein the third distillation column is sized and configured to provide a third distillate stream and a third bottoms stream, wherein the third distillate stream is combined with the feed stream.

Depending on the composition of the feed stream, the feed stream may be introduced within the lower 15% of the first distillation column. Likewise, depending on the composition of the feed stream, the recycle stream may be introduced within an upper 15% of the first distillation column and may be substantially condensed. The first bottoms stream may in turn be introduced to the second distillation column within 15% of the middle of the second distillation column. The second distillate stream may be introduced to the third distillation column in an upper portion of the third distillation column and may be substantially uncondensed.

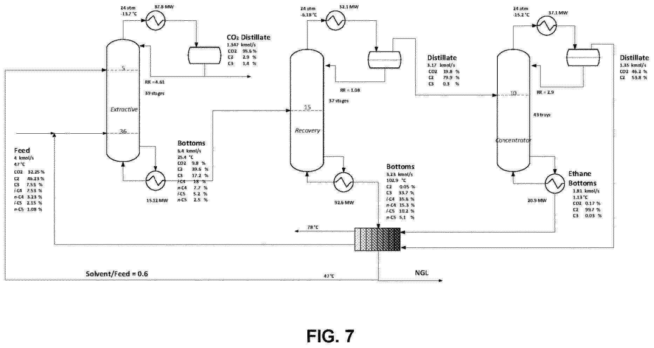

Figure 7 illustrates an exemplary system and method (not falling within the scope of the appended claims) for separating carbon dioxide and ethane, as discussed above. The exemplary system involves three columns: the $CO_2$ recovery or extraction column ("first distillation column"), the solvent recovery column ("second distillation column"), and the concentrator column ("third distillation column"). In this process, not all the $CO_2$ exits the top of the extraction column, the first column. In this example, the bottom product of the extraction column contains 10 mol % $CO_2$ along with ethane and heavier hydrocarbons. The second column recovers high-purity solvent. The recovery column distillate feeds the concentrator column, which produces ethane as a product and an azeotropic mixture recycle stream.

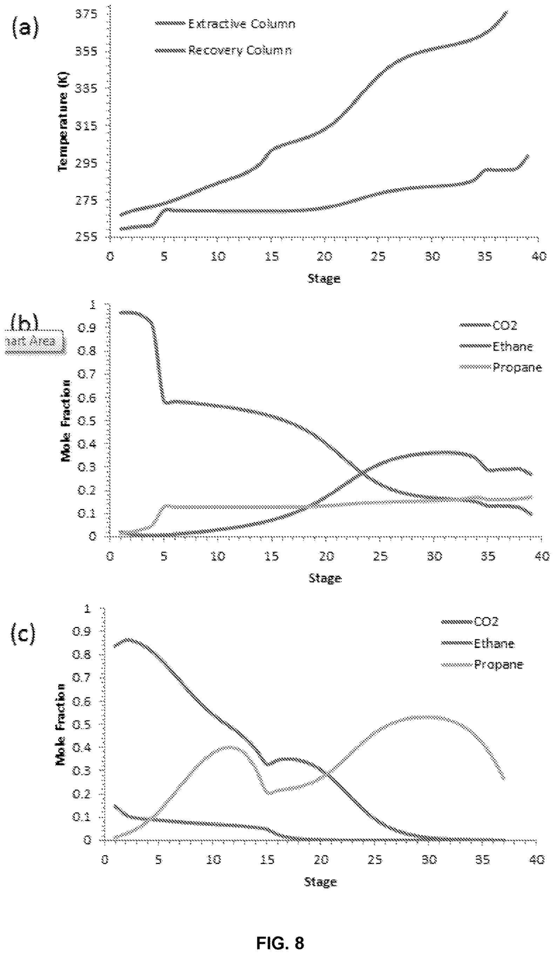

The exemplary extractive column had 39 stages and operated at 24 atm. The feed gas entered on tray 36 and the solvent with the flow rate of 2.4 kmol/s (Solvent/Feed = 0.6) entered on tray 5 near the top. Figures 8(a) and (b) plot the temperature and liquid composition profiles in the extractive column, respectively. The solvent in the extractive distillation column ("first distillation column") altered the relative volatility between $CO_2$ and ethane, driving $CO_2$ to the top of the column and ethane to the bottom of the column. The upper section of the first column (above the entrainer (i.e., solvent) feed location) separated the $CO_2$ and the entrainer. Figure 8(b) indicates that the $CO_2$ concentration increased at the entrainer entry point (stage 5). The middle of the column, between the entrainer feed stage and the fresh feed stage, prevented ethane from going up the column. Figure 8(b) clearly shows that the concentration of ethane increased from stages 5 to 36, where the entrainer and the feed enter, respectively. The bottom of the column, below the fresh feed location, prevented $CO_2$ from going down the column. The extractive column produces a $CO_2$-rich distillate (95.6 mol %).

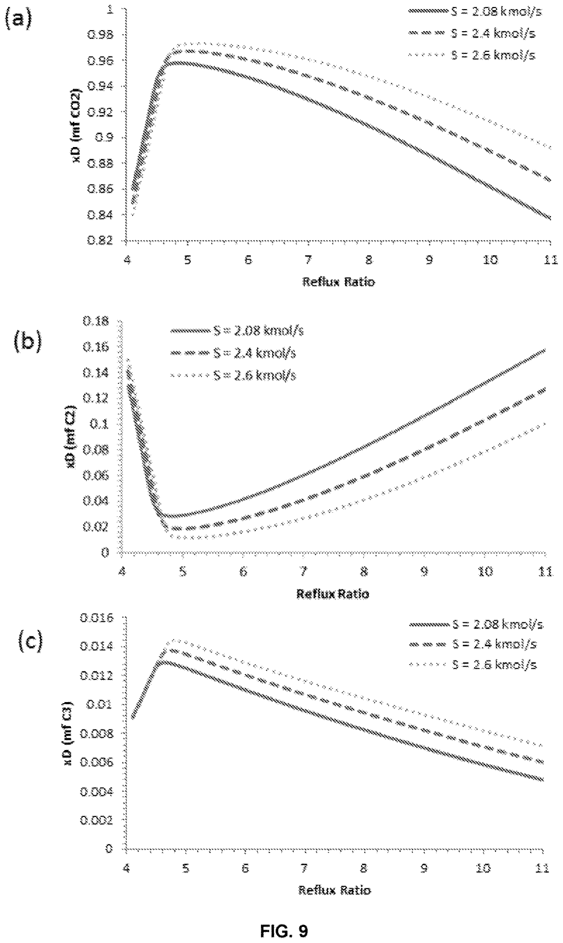

Figure 9 illustrates the effects of changing the solvent flow rate ($S$) and/or reflux ratio ($RR$). Increasing the reflux ratio decreased the impurity of solvent in the distillate, while increasing the solvent flow rate improved the distillate $CO_2$ purity. However, the same is not true for the $CO_2$-ethane system when using the NGL solvent. The effect of higher solvent flow rates depended on the reflux ratio; in the higher RR range, increasing the solvent flow rate also increased the distillate $CO_2$ purity (Figure 9(a)). However, in the lower RR range, the opposite occurred.

Additionally, Figures 9(b) and (c) reveal nonmonotonic relationships between RR and both of the distillate impurities ($C_2$ and $C_3$), but they were opposite in shape. The $C_2$ curve reaches a minimum and the $C_3$ curve (the lightest of the components in the NGL solvent) reaches a maximum. The same relationships are also true of the solvent flow rate: more solvent decreased $C_2$ impurity but increased $C_3$ impurity.

These interesting phenomena occurred because the solvent is chemically similar to the ethane being separated from the $CO_2$. While operated at the lower of the two possible reflux ratios, the minimum solvent flow rate was found which met the two specifications for the extractive column. As shown in Figure 7, the solvent flow rate was 2.4 kmol/s and the reflux ratio was 4.61. The resulting heat exchanger duties were 87.86 MW in the condenser and 15.12 MW in the reboiler. The distillate flow rate was 1.347 kmol/s of mostly $CO_2$ (95.6 mol %) with impurities of 2.9 mol % ethane and 1.4 mol % propane. The bottoms flow rate of the column was 6.4 kmol/s and carried most of the ethane, some of the $CO_2$ in the fresh feed, and heavier hydrocarbons to the solvent recovery column ("second distillation column").

The distillate of the extractive column in this design remains liquid. In contrast, the distillate of the conventional design cools the recycled NGL, which converts it to a vapor stream. There are several potential heat integration steps for this liquid stream, depending on the potential use of the $CO_2$. For example, a simple pump could pressurize the stream to above its vapor pressure at ambient conditions. The stream could then warm to ambient temperature by heat integration with any one or several of the condensers, further decreasing the process energy demand. The final liquid stream would then be suitable for enhanced oil recovery or other pipeline-based, large-scale $CO_2$ applications. Alternatively, if the $CO_2$ was to be locally vented, the stream could reduce the overall process energy demand significantly by heat integration with one or more of the condenser circuits.

The solvent recovery column ("second distillation column") had 37 stages, and the first bottoms stream of the extractive column (first column) was fed on tray 15. Unlike the conventional design that uses a total condenser, this column in this exemplary design had a partial condenser. The design specifications of this column were 0.3 mol % propane in the distillate and 0.05 mol % ethane in the bottoms. A reflux ratio of 1.08 was used to achieve these specifications.

Figures 8(a) and (c) exhibit the temperature and liquid composition profiles in the solvent recovery column, respectively. The ethane and $CO_2$ concentrations functionally monotonically decreased from the distillate to the bottoms, but the $C_3$ profile had two local maxima, one each between the feed and the distillate and the feed and the bottoms, with overall increasing concentration from the distillate to the bottoms.

The condenser duty was 37.1 MW, and the reboiler duty was 20.9 MW. The heavy hydrocarbons exited with the bottoms product ("second bottoms stream") and split, via a diversion system, into the NGL product (0.834 kmol/s) and the solvent, which recycles back to the extractive column separate from the feed stream. As discussed previously, the NGL stream could pass through a sequence of traditional distillation columns for propane, butane, and pentane recoveries, which were not included in any of these simulations. The distillate of the solvent recovery column was a mixture of $CO_2$ (20 mol %) and ethane (80 mol %) that needed to be concentrated before recycling to the initial feed.

The concentrator column ("third distillation column") had 43 stages, and the distillate of the recovery column was fed on tray 10. This column also had a partial condenser. Ethane with high purity (99.7 mol %) formed the bottoms product (1.82 kmol/s) after heat recovery. The mixture of $CO_2$-ethane went overhead with a molar flow rate of 1.35 kmol/s with the $CO_2$ concentrated up to 46 mol %. After heat recovery, this was recycled back to the extraction column as part of the feed stream.

To establish a fair comparison between the exemplary Figure 5 process (not falling within the scope of the appended claims) and the exemplary Figure 7 process (also not falling within the scope of the appended claims), the sequential quadratic programming (SQP) method was used to optimize both designs. The SQP optimization method coupled with the efficient sensitivity analysis tool from Aspen Plus minimized the total energy requirement for the extractive column, as follows:

$$Min(Q) = f\left(N_T, N_F, N_S, RR, V, \frac{S}{F}\right) \tag{1}$$
$$subject\ to\ \vec{y}_m \geq \vec{x}_m$$

where the optimization parameters used here are: the total number of stages ($N_T$), feed location ($N_F$), solvent location ($N_S$), reflux ratio ($RR$), boilup rate ($V$), and solvent to feed flow rate ratio ($\frac{S}{F}$), while $y_m$ and $x_m$ are the vectors of the obtained and desired purities for the $m$ products, respectively. An additional objective function determined the optimal energy cost vs. the number of stages [5]-[7].

The total capital costs, total operating costs, and total annual costs (TAC) were calculated. TAC was calculated as

$$TAC = operating\ cost + \frac{capital\ cost}{life\ of\ the\ plant} \tag{2}$$

where a plant life of 30 years was considered in this investigation. This somewhat exceeds many natural gas process plant lifetimes but also allows for equipment reuse. Most of the savings in the Figure 7 process were in operating costs, so the economics are relatively insensitive to the plant cost. The Aspen Process Economic Analyzer provides relative costs, taking into account capital and operating costs together with technical and process parameters. Table 6 compares certain economic performance indicators of the two processes. The introduction of the third column caused a noticeable decrease in the reflux ratios of the extractive and recovery columns, which was 4.61 and 1.08, respectively, compared with 6.04 and 2.18 in the Figure 5 system. The capital costs of the columns were significantly altered by the reflux ratios, recycle flow rates, and entrainer usage in the distillation cases. Additionally, these parameters determined the process heat duties and product quality. As a result, the Figure 7 process leads to 10% lower TAC, with a 14% reduction in specific energy demand and $CO_2$ emissions. All costs indicated here decrease. Total capital costs and most operating costs decrease by about 5%, with a 10% reduction in steam costs, consistent with the sum of the reboiler thermal loads being the biggest change.

The energy requirements closely correlate with $CO_2$ emissions when no heat integration is considered. When part of the process heat is reused instead of primary energy, then the $CO_2$ emissions are lower as compared to the figure expected from the energy data [1],[3]. Fuel combustion calculations assumed that air was in excess, which ensures complete combustion and prevents formation of carbon monoxide. The amount of $CO_2$ emitted was related to the amount of fuel burned in the heating devices, and was calculated according to the method described by Gadalla et al. and Kiss et al. [8],[9]:

$$(CO_2)_{emissions} = \left(\frac{Q_{fuel}}{NHV}\right)\left(\frac{C\%}{100}\right)\alpha \tag{3}$$

where $\alpha = 3.67$ is the ratio of molar masses of $CO_2$ and C, and $NHV$ is the net (lower) heating value of natural gas with a carbon mass fraction of 0.41. Hence the quantity of fuel used was calculated as follows:

$$Q_{fuel} = \frac{Q_{proc}}{\lambda_{proc}}\left(h_{proc} - 419\right)\frac{T_{FTB} - T_0}{T_{FTB} - T_{stack}} \tag{4}$$

where $\lambda_{proc}$ (kJ/kg) and $h_{proc}$ (kJ/kg) are the latent heat and enthalpy of the steam, and $T_{FTB}$ (K) and $T_0$ (K) are the flame and stack temperatures, respectively. This equation represents a steam balance around the boiler and relates the quantity of fuel necessary to provide a heat duty of $Q_{proc}$. The hourly rate of $CO_2$ emissions for the Figure 5 process and the Figure 7 process also appear in Table 6. This indicates that the exemplary process and system decreases the carbon footprint for extractive distillation of ethane and carbon dioxide.

Table 6

| Performance indicators | Figure 5 process | | Figure 7 process | | |
|---|---|---|---|---|---|
| Capital Costs | | | | | |
| | Extractive column | Recovery column | Extractive column | Recovery column | Concentrator column |
| Tower (USD) | 8,164,700 | 10,589,600 | 4,556,700 | 10,939,100 | 2,502,700 |
| Reboiler (USD) | 301,400 | 549,600 | 62,100 | 693,100 | 69,600 |
| Condenser (USD) | 2,928,600 | 1,125,500 | 2,217,800 | 805,400 | 1,026,900 |
| Reflux pump (USD) | 125,300 | 68,300 | 104,500 | 46,300 | 46,200 |
| Heat exchanger (USD) | 988,000 | | 599,700 | | |
| External Cooler (USD) | 56,300 | | - | | |
| Total capital costs (USD) | 24,897,300 | | 23,670,100 | | |
| Operating Costs | | | | | |
| Electricity (USD/year) | 516,657 | | 491,334 | | |
| Refrigerant (USD/year) | 5,986,169 | | 5,632,501 | | |
| Steam (USD/year) | 39,436,732 | | 35,236,607 | | |
| Cooling Water (external cooler) (USD/year) | 55,191 | | - | | |

(continued)

| Performance indicators | Figure 5 process | | Figure 7 process | | |
|---|---|---|---|---|---|
| | Capital Costs | | | | |
| | Extractive column | Recovery column | Extractive column | Recovery column | Concentrator column |
| Total operating costs (USD /year) | 45,994,747 | | 41,360,441 | | |
| | Annualized Cost | | | | |
| Total Annual Cost (USD/year) | 46,824,657 | | 42,149,445 | | |
| Specific energy requirement (kW h/kg $CO_2$) | 1.627 | | 1.401 | | |
| $CO_2$ emissions (kg $CO_2$/s) | 7.16 | 6.15 | | | |

As compared to the Figure 5 process (not falling within the scope of the appended claims), the exemplary process strategy (also not falling within the scope of the appended claims) showed an approximately 14% reduction in total energy demand and associated carbon emissions, most of which were from reduced steam demand. Aspen Plus process economics analyses indicated about a 5% reduction in capital and a 10% reduction in operating costs when comparing optimized versions of the Figure 5 process and the Figure 7 process. The Figure 7 process reduced the total annual costs (TAC) by 10%, without compromising the desired purification. The Figure 7 process was also easier to operate because it was unnecessary to withdraw $CO_2$ completely in the extractive column. Additionally, the Figure 7 process produced $CO_2$ as a liquid product, which avoided the significant amount of energy required for liquefaction.

As discussed above, methods of cryogenically purifying process streams may be used to remove $CO_2$ from raw natural gas. Likewise, methods of separating carbon dioxide from ethane may be used in purifying the ethane separated from natural gas. Accordingly, methods are contemplated herein that encompass both processes. A method of separating carbon dioxide from a process stream may comprise providing a process stream comprising gaseous carbon dioxide and a primary component. The process stream may further comprise at least a secondary component. The method comprises cooling the process stream to at or below the frost point of carbon dioxide in the process stream, thereby forming solid carbon dioxide and then physically separating solid carbon dioxide from the process stream to form a separated solid carbon dioxide slurry stream and a liquid primary component stream. The method may further comprise separating at least the secondary component and residual carbon dioxide from the liquid primary component stream. The method may further comprise separating the residual carbon dioxide from the secondary component using extractive distillation with a concentrator distillation column. In the natural gas process setting, the primary component may be methane and the secondary component may be ethane. This example of combined processes may include any of the features of the separate cryogenic and extractive distillation processes disclosed in more detail above.

It should be understood that just as the cryogenic processes may be applied to non-natural gas process streams, likewise, the extractive distillation processes may be applied to streams comprising ethane and $CO_2$ that originate from sources other than natural gas. For example, if a process stream comprising ethane and $CO_2$ did not also contain higher molecular weight hydrocarbons that could be used as a solvent, the extractive distillation process could still be used. A solvent such as butane could be introduced and completely recycled through the process, instead of using naturally present higher molecular weight hydrocarbons.

Without further elaboration, it is believed that one skilled in the art can use the preceding description to utilize the present disclosure to its fullest extent. The examples and embodiments disclosed herein are to be construed as merely illustrative and exemplary and not a limitation of the scope of the present invention, wherein the scope of the invention is defined only by the appended claims.

List of References Cited

[1] Y. Tavan, S. Shahhosseini, S.H. Hosseini, Feed-splitting technique in the extractive distillation of CO2-ethane azeotropic process, Separation and Purification Technology, 122 (2014) 47-53.

[2] Y. Tavan, S.H. Hosseini, A novel application of reactive absorption to break the CO2-ethane azeotrope with low energy requirement, Energy Conversion and Management, 75 (2013) 407-417. hematical modeling, Journal of Natural Gas Science and Engineering, 21 (2014) 275-282.

[3] A.A. Kiss, R.M. Ignat, Innovative single step bioethanol dehydration in an extractive dividing-wall column, Separation and Purification Technology, 98 (2012) 290-297.

[4] W.L. Luyben, Control of an Extractive Distillation System for the Separation of CO2 and Ethane in Enhanced Oil Recovery Processes, Industrial & Engineering Chemistry Research, 52 (2013) 10780-10787.

[5] I. Dejanovic, L. Matijasevic, Z. Olujic, An Effective Method for Establishing the Stage and Reflux Requirement of Three-product Dividing Wall Columns, Chemical and Biochemical Engineering Quarterly, 25 (2011) 147-157.

[6] A. Kiss, R. Ignat, Optimal economic design of a bioethanol dehydration process by extractive distillation, Energy Technol, 1 (2013) 166-170.

[7] Jordi Bonet-Ruiz, Alexandra-Elena Bonet-Ruiz, Victor-Corneliu Radu, Joan Llorens Llacuna, Jose Costa Lopez, A Simplified Cost Function for Distillation Systems Evaluation, CHEMICAL ENGINEERING TRANSACTIONS, 21 (2010) 1405-1410.

[8] A.A. Kiss, J. David, P. Suszwalak, Enhanced bioethanol dehydration by extractive and azeotropic distillation in dividing-wall columns, Separation and Purification Technology, 86 (2012) 70-78.

[9] M. Gadalla, Ž Olujic, A. de Rijke, P.J. Jansens, Reducing CO2 emissions of internally heat-integrated distillation columns for separation of close boiling mixtures, Energy, 31 (2006) 2409-2417.

## Claims

1. A method of separating carbon dioxide from a process stream comprising:

   providing a process stream comprising carbon dioxide and a primary component;
   wherein the process stream is gaseous carbon dioxide;
   wherein the process stream is at a first temperature and a first pressure; and
   cooling the process stream to at or below the condensation temperature of the primary component in the process stream;
   separating any gases from the process stream that did not condense during cooling the process stream to at or below the condensation temperature of the primary component to form a first separated gaseous stream;
   cooling the process stream further to at or below the frost point of carbon dioxide in the process stream, thereby forming solid carbon dioxide; and
   separating physically solid carbon dioxide from the process stream to form a separated solid carbon dioxide slurry stream and a liquid primary component stream;
   **characterized in that** cooling the process stream to at or below the frost point of carbon dioxide in the process stream comprises:

      directly contacting the process stream with a colder contact gas stream, and
      separating a warmed contact gas stream from a slurry of the condensed primary component and the solid carbon dioxide, and
      wherein the contact gas comprises nitrogen, air, a noble gas, carbon monoxide or a combination thereof.

2. The method of claim 1, further comprising:

   cooling the process stream to a second temperature, wherein the second temperature is above the melting point of pure carbon dioxide at the pressure of the process stream; and
   separating any liquids from the process stream that condensed during cooling the process stream to the second temperature to form a first separated liquids stream.

3. The method of claim 1, further comprising:

   cooling the process stream to a third temperature, wherein the third temperature is above and near the condensation temperature of the primary component at the pressure of the process stream,
   separating any liquids from the process stream that condensed during cooling the process stream to the third temperature to form a second separated liquids stream,

combining the second separated liquids stream with the first separated liquids stream to form a combined separated liquids stream

warming the combined separated liquids stream to about the first temperature, wherein warming the combined separated liquids stream cools the process stream, a separate refrigeration loop, or both, at one or more locations, wherein the first separated liquids stream and the second separated liquids stream each comprise condensed components comprising natural gas liquids, and

separating components of the combined separated liquids stream into separate product streams.

**4.** The method of claim 1, wherein the first separated gaseous stream comprises carbon dioxide, trace components, or a combination thereof, and further comprising:

combining the first separated gaseous stream with the separated solid carbon dioxide stream to form a combined carbon dioxide stream

warming the combined carbon dioxide stream to about the first temperature, and

wherein warming the combined carbon dioxide stream cools the process stream, a separated refrigeration loop, or both, at one or more locations.

**5.** The method of claim 1, wherein cooling the process stream to at or below the frost point of carbon dioxide in the process stream comprises reducing the pressure of the process stream sufficient to vaporize a portion of the condensed primary component, thereby cooling the remainder of the process stream, and further comprising:

reducing the pressure utilizes passing the process stream through a pressure regulating device (V-1),

applying additional cooling to the process stream to desublimate or further desublimate solid carbon dioxide in the process stream, and

wherein applying additional cooling comprises directly contacting the process stream with a colder contact gas stream or using a non-direct contact heat exchanger configured to remove desublimated carbon dioxide formed within the heat exchanger.

**Patentansprüche**

**1.** Ein Verfahren zum Abscheiden von Kohlendioxid aus einem Prozessstrom, das Folgendes beinhaltet:

Bereitstellen eines Prozessstroms, der Kohlendioxid und eine Hauptkomponente beinhaltet;

wobei der Prozessstrom gasförmiges Kohlendioxid ist;

wobei der Prozessstrom eine erste Temperatur und einen ersten Druck aufweist; und

Abkühlen des Prozessstroms auf oder unter die Kondensationstemperatur der Hauptkomponente in dem Prozessstrom;

Abscheiden aller Gase aus dem Prozessstrom, die während des Abkühlens des Prozessstroms auf oder unter die Kondensationstemperatur der Hauptkomponente nicht kondensiert sind, um einen ersten abgeschiedenen gasförmigen Strom zu formen;

weiteres Abkühlen des Prozessstroms auf oder unter den Frostpunkt von Kohlendioxid in dem Prozessstrom, dadurch Formen von festem Kohlendioxid; und

physisches Abscheiden von festem Kohlendioxid aus dem Prozessstrom, um einen Schlammstrom abgeschiedenen festen Kohlendioxids und einen flüssigen Hauptkomponentenstrom zu formen;

**dadurch gekennzeichnet, dass** das Abkühlen des Prozessstroms auf oder unter den Frostpunkt von Kohlendioxid in dem Prozessstrom Folgendes beinhaltet:

direktes In-Kontakt-Bringen des Prozessstroms mit einem kälteren Kontaktgasstrom und

Abscheiden eines erwärmten Kontaktgasstroms aus einem Schlamm der kondensierten Hauptkomponente und des festen Kohlendioxids, und

wobei das Kontaktgas Stickstoff, Luft, ein Edelgas, Kohlenmonoxid oder eine Kombination davon beinhaltet.

**2.** Verfahren gemäß Anspruch 1, das ferner Folgendes beinhaltet:

Abkühlen des Prozessstroms auf eine zweite Temperatur, wobei die zweite Temperatur über dem Schmelzpunkt reinen Kohlendioxids bei dem Druck des Prozessstroms liegt; und

Abscheiden aller Flüssigkeiten aus dem Prozessstrom, die während des Abkühlens des Prozessstroms auf die zweite Temperatur kondensiert sind, um einen ersten Strom abgeschiedener Flüssigkeiten zu formen.

3. Verfahren gemäß Anspruch 1, das ferner Folgendes beinhaltet:

Abkühlen des Prozessstroms auf eine dritte Temperatur, wobei die dritte Temperatur über und nahe der Kondensationstemperatur der Hauptkomponente bei dem Druck des Prozessstroms liegt,
Abscheiden aller Flüssigkeiten aus dem Prozessstrom, die während des Abkühlens des Prozessstroms auf die dritte Temperatur kondensiert sind, um einen zweiten Strom abgeschiedener Flüssigkeiten zu formen,
Kombinieren des zweiten Stroms abgeschiedener Flüssigkeiten mit dem ersten Strom abgeschiedener Flüssigkeiten, um einen kombinierten Strom abgeschiedener Flüssigkeiten zu formen,
Erwärmen des kombinierten Stroms abgeschiedener Flüssigkeiten auf etwa die erste Temperatur, wobei das Erwärmen des kombinierten Stroms abgeschiedener Flüssigkeiten den Prozessstrom, einen separaten Kältekreislauf oder beides an einer oder mehreren Stellen abkühlt,
wobei der erste Strom abgeschiedener Flüssigkeiten und der zweite Strom abgeschiedener Flüssigkeiten jeweils kondensierte Komponenten beinhalten, die Erdgasflüssigkeiten beinhalten, und
Abscheiden von Komponenten des kombinierten Stroms abgeschiedener Flüssigkeiten in separate Produktströme.

4. Verfahren gemäß Anspruch 1, wobei der erste abgeschiedene gasförmige Strom Kohlendioxid, Spurenkomponenten oder eine Kombination davon beinhaltet, und das ferner Folgendes beinhaltet:

Kombinieren des ersten abgeschiedenen gasförmigen Stroms mit dem Strom abgeschiedenen festen Kohlendioxids, um einen kombinierten Kohlendioxidstrom zu formen,
Erwärmen des kombinierten Kohlendioxidstroms auf etwa die erste Temperatur, und wobei das Erwärmen des kombinierten Kohlendioxidstroms den Prozessstrom, einen separaten Kältekreislauf oder beides an einer oder mehreren Stellen abkühlt.

5. Verfahren gemäß Anspruch 1, wobei das Abkühlen des Prozessstroms auf oder unter den Frostpunkt von Kohlendioxid in dem Prozessstrom das ausreichende Reduzieren des Drucks des Prozessstroms, um einen Anteil der kondensierten Hauptkomponente zu verdampfen, beinhaltet, wodurch der Rest des Prozessstroms abgekühlt wird, und das ferner Folgendes beinhaltet:

Reduzieren des Drucks nutzt das Leiten des Prozessstroms durch eine druckregulierende Vorrichtung (V-1),
Anwenden zusätzlichen Abkühlens auf den Prozessstrom, um festes Kohlendioxid in dem Prozessstrom zu resublimieren oder weiter zu resublimieren, und
wobei das Anwenden zusätzlichen Abkühlens das direkte In-Kontakt-Bringen des Prozessstroms mit einem kälteren Kontaktgasstrom oder das Verwenden eines Wärmeaustauschers ohne direkten Kontakt, der konfiguriert ist, um resublimiertes Kohlendioxid, das innerhalb des Wärmeaustauschers geformt wird, zu entfernen, beinhaltet.

**Revendications**

1. Un procédé de séparation de dioxyde de carbone à partir d'un flux de traitement comprenant :

la fourniture d'un flux de traitement comprenant du dioxyde de carbone et un constituant primaire ;
dans lequel le flux de traitement est du dioxyde de carbone gazeux ;
dans lequel le flux de traitement est à une première température et une première pression ; et
le refroidissement du flux de traitement jusqu'à ou en dessous de la température de condensation du constituant primaire dans le flux de traitement ;
la séparation de tous les gaz du flux de traitement qui ne se sont pas condensés pendant le refroidissement du flux de traitement jusqu'à ou en dessous de la température de condensation du constituant primaire afin de former un premier flux gazeux séparé ;
le refroidissement plus avant du flux de traitement jusqu'à ou en dessous du point de congélation du dioxyde de carbone dans le flux de traitement, formant de ce fait du dioxyde de carbone solide ; et
la séparation physique du dioxyde de carbone solide du flux de traitement afin de former un flux de suspension de dioxyde de carbone solide séparé et un flux de constituant primaire liquide ;
**caractérisé en ce que** le refroidissement du flux de traitement jusqu'à ou en dessous du point de congélation du dioxyde de carbone dans le flux de traitement comprend :

la mise en contact directe du flux de traitement avec un flux de gaz de contact plus froid, et
la séparation d'un flux de gaz de contact chauffé d'une suspension du constituant primaire condensé et du dioxyde de carbone solide, et
dans lequel le gaz de contact comprend de l'azote, de l'air, un gaz noble, du monoxyde de carbone ou une combinaison de ceux-ci.

2.  Le procédé de la revendication 1, comprenant en outre :

le refroidissement du flux de traitement jusqu'à une deuxième température, dans lequel la deuxième température est au-dessus du point de fusion du dioxyde de carbone pur à la pression du flux de traitement ; et
la séparation de tous les liquides du flux de traitement qui se sont condensés pendant le refroidissement du flux de traitement jusqu'à la deuxième température afin de former un premier flux de liquides séparé.

3.  Le procédé de la revendication 1, comprenant en outre :

le refroidissement du flux de traitement jusqu'à une troisième température, dans lequel la troisième température est au-dessus et proche de la température de condensation du constituant primaire à la pression du flux de traitement,
la séparation de tous les liquides du flux de traitement qui se sont condensés pendant le refroidissement du flux de traitement jusqu'à la troisième température afin de former un deuxième flux de liquides séparé,
la combinaison du deuxième flux de liquides séparé au premier flux de liquides séparé afin de former un flux de liquides séparé combiné,
le chauffage du flux de liquides séparé combiné jusqu'à environ la première température, dans lequel le chauffage du flux de liquides séparé combiné refroidit le flux de traitement, une boucle de réfrigération séparée, ou les deux, au niveau d'un ou de plusieurs emplacements,
dans lequel le premier flux de liquides séparé et le deuxième flux de liquides séparé comprennent chacun des constituants condensés comprenant des liquides de gaz naturel, et
la séparation de constituants du flux de liquides séparé combiné en des flux de produit séparés.

4.  Le procédé de la revendication 1, dans lequel le premier flux gazeux séparé comprend du dioxyde de carbone, des constituants à l'état de trace, ou une combinaison de ceux-ci, et comprenant en outre :

la combinaison du premier flux gazeux séparé au flux de dioxyde de carbone solide séparé afin de former un flux de dioxyde de carbone combiné,
le chauffage du flux de dioxyde de carbone combiné jusqu'à environ la première température, et
dans lequel le chauffage du flux de dioxyde de carbone combiné refroidit le flux de traitement, une boucle de réfrigération séparée, ou les deux, au niveau d'un ou de plusieurs emplacements.

5.  Le procédé de la revendication 1, dans lequel le refroidissement du flux de traitement jusqu'à ou en dessous du point de congélation du dioxyde de carbone dans le flux de traitement comprend une réduction de la pression du flux de traitement suffisante pour vaporiser une portion du constituant primaire condensé, refroidissant de ce fait le reste du flux de traitement, et comprenant en outre :

la réduction de la pression utilise le passage du flux de traitement à travers un dispositif de régulation de la pression (V-1),
l'application d'un refroidissement supplémentaire au flux de traitement afin de désublimer ou désublimer davantage le dioxyde de carbone solide dans le flux de traitement, et
dans lequel l'application d'un refroidissement supplémentaire comprend la mise en contact directe du flux de traitement avec un flux de gaz de contact plus froid ou l'utilisation d'un échangeur thermique à contact non direct configuré pour retirer du dioxyde de carbone désublimé formé au sein de l'échangeur thermique.

FIG. 1

**FIG. 2**

**FIG. 3**

FIG. 4

24 atm
-13.95 °C

110.2 MW

RR = 6.04

**CO₂ Distillate**
1.347 kmol/s
CO2    95.6 %
C2      3.1  %
C3      1.2  %

5

39

**Feed**
4 kmol/s
47 °C
CO2   32.25 %
C2    46.23 %
C3     7.53  %
i-C4   7.53  %
n-C4   3.23  %
i-C5   2.15  %
n-C5   1.08  %

*Extractive*

50

**Bottoms**
5.173 kmol/s
52.05 °C
CO2  0.05 %
C2    34.9 %
C3    21.9  %
i-C4  23.2  %
n-C4  10 %
i-C5  6.6  %
n-C5  3.3  %

25 atm
54.85 °C

73.32 MW

24 atm
0.45 °C

51.38 MW

RR = 2.18

**Ethane Distillate**
1.81 kmol/s
CO2   0.14 %
C2    99.7 %
C3    0.09 %

25

*Recovery*

50

**NGL**
**Bottoms**
0.842 kmol/s
C2     0.06 %
C3    33.7 %
i-C4  35.6 %
n-C4  15.3 %
i-C5  10.2 %
n-C5   5.1  %

25 atm
104.85 °C

70.74 MW

**Solvent/Feed = 0.63**

## FIG. 5

**FIG. 6**

FIG. 7

FIG. 8

FIG. 9

## REFERENCES CITED IN THE DESCRIPTION

### Patent documents cited in the description

- WO 2014058648 A1
- US 8715401 B
- US 8764885 B

### Non-patent literature cited in the description

- **SHEN, T ; T. GAO ; W. LIN ; A. GU.** Determination of CO2 Solubility in Saturated Liquid CH4 + N2 and CH4 + C2H6 Mixtures above Atmospheric Pressure. *Journal of Chemical & Engineering Data,* 2012, vol. 57 (8), 2296-2303
- **Y. TAVAN ; S. SHAHHOSSEINI ; S.H. HOSSEINI.** Feed-splitting technique in the extractive distillation of CO2-ethane azeotropic process. *Separation and Purification Technology,* 2014, vol. 122, 47-53
- **Y. TAVAN ; S.H. HOSSEINI.** A novel application of reactive absorption to break the CO2-ethane azeotrope with low energy requirement. *Energy Conversion and Management,* 2013, vol. 75, 407-417
- *Journal of Natural Gas Science and Engineering,* 2014, vol. 21, 275-282
- **A.A. KISS ; R.M. IGNAT.** Innovative single step bioethanol dehydration in an extractive dividing-wall column. *Separation and Purification Technology,* 2012, vol. 98, 290-297
- **W.L. LUYBEN.** Control of an Extractive Distillation System for the Separation of CO2 and Ethane in Enhanced Oil Recovery Processes. *Industrial & Engineering Chemistry Research,* 2013, vol. 52, 10780-10787
- **I. DEJANOVIC ; L. MATIJASEVIC ; Z. OLUJIC.** An Effective Method for Establishing the Stage and Reflux Requirement of Three-product Dividing Wall Columns. *Chemical and Biochemical Engineering Quarterly,* 2011, vol. 25, 147-157
- **A. KISS ; R. IGNAT.** Optimal economic design of a bioethanol dehydration process by extractive distillation. *Energy Technol,* 2013, vol. 1, 166-170
- **JORDI BONET-RUIZ ; ALEXANDRA-ELENA BONET-RUIZ ; VICTOR-CORNELIU RADU ; JOAN LLORENS LLACUNA ; JOSE COSTA LOPEZ.** A Simplified Cost Function for Distillation Systems Evaluation. *CHEMICAL ENGINEERING TRANSACTIONS,* 2010, vol. 21, 1405-1410
- **A.A. KISS ; J. DAVID ; P. SUSZWALAK.** Enhanced bioethanol dehydration by extractive and azeotropic distillation in dividing-wall columns. *Separation and Purification Technology,* 2012, vol. 86, 70-78
- **M. GADALLA, Ž OLUJIĆ ; A. DE RIJKE ; P.J. JANSENS.** Reducing CO2 emissions of internally heat-integrated distillation columns for separation of close boiling mixtures. *Energy,* 2006, vol. 31, 2409-2417